# EUROPÄISCHE PATENTSCHRIFT

(11) **EP 1 760 031 B1**
(45) Veröffentlichungstag und Bekanntmachung des Hinweises auf die Patenterteilung: **26.12.2012**
(21) Anmeldenummer: 06014393.0
(22) Anmeldetag: 11.07.2006
(51) Int. Cl.: B66C 23/62, B66C 23/80, B62D 55/084, B62D 55/06

(54) **Transportoptimierter Kranunterwagen**
Crane lower body optimised for transport
Châssis inférieur de grue optimisé pour transport

(30) Priorität: 31.08.2005 DE 102005041255
(43) Veröffentlichungstag der Anmeldung: 07.03.2007
(73) Patentinhaber: Terex Demag GmbH, 66482 Zweibrücken (DE)
(72) Erfinder: Riedinger, Harald, 66482 Zweibrücken (DE); Nöske, Ingo, 66482 Zweibrücken (DE)
(74) Vertreter: Hofmann, Matthias

(56) Entgegenhaltungen:
- EP-A- 0 736 480
- EP-A- 1 466 856
- DE-A1- 3 442 319
- JP-A- 7 089 696
- JP-A- 7 096 869
- US-A- 3 385 014
- US-A- 3 700 115

## Beschreibung

### TECHNISCHES GEBIET

Die vorliegende Erfindung betrifft einen transportoptimierten Kranunterwagen, der insbesondere wahlweise in einem so genannten CC-Kran oder einen PC-Kran eingesetzt werden kann. Bei ersterer Kranvariante handelt es sich um einen sogenannten Crawler-Crane. Ein Crawler-Crane zeichnet sich dadurch aus, dass er auf Raupen verfahrbar ist. Die zweite Kranvariante ist ein so genannter Pedestal Crane, bei dem der Kranunterwagen ortsfest auf Bodenabstützträgern steht.

### HINTERGRUND DER ERFINDUNG

Allgemein fordern Betreiber von Kranen heutzutage mehr und mehr Krane, die sehr große Lasten heben können. Entsprechend vergrößern sich die Abmessungen solcher Krane immer mehr. Insbesondere werden Gittermastkrane zunehmend größer.

Je nach Einsatzort und den dort vorzufindenden Umgebungsbedingungen und insbesondere in Abhängigkeit von der Bodenbeschaffenheit des Einsatzortes eines solchen Kranes sind auch die Auflagerelemente eines solchen Kranes, also die Bauteile, auf den der gesamte Kran steht, verschieden. So werden teilweise CC-Krane eingesetzt, die mittels Raupen verfahrbar sind. Üblicherweise sind dabei zwei einander gegenüberliegende Raupenträger an einem Kranunterwagen lösbar befestigt. Beispielsweise ist in der EP 0 736 480 B1 ein Kranunterwagen bzw. Kranuntergestell offenbart, an dem an zwei gegenüberliegenden Seiten des Kranuntergestells je ein Raupenträger über Bolzen abnehmbar anbringbar ist. Bei dem hier bekannten Raupenkran mit abnehmbar montierbaren Raupenträgern ist das Mittelteil des Kranunterwagens mit vier Stützstreben ausgebildet, wovon sich jeweils zwei auf die eine Seite und zwei auf die andere Seite im Wesentlichen horizontal erstrecken. An den Enden der Stützstreben sind Lagerflächen zum Anbolzen der Raupenträger ausgebildet. Die Stützstreben selbst sind am Mittelteil, das zum abnehmbaren Montieren eines drehbaren Kranoberwagens ausgebildet ist, starr angeformt.

Durch die Straßenverkehrsvorschriften sind zum einen das Gewicht eines solchen Kranes, zum anderen dessen Abmessungen, insbesondere auch die Längs- und Querabmessungen, begrenzt. Um auch größere Krane transportfähig zu machen, wird oftmals ein großer Kran in für die Straße transportfähige Module bzw. Einzelteile zerlegt. In dem in der EP 0 736 480 B 1 gezeigten Ausführungsbeispiel wird sich dahingehend beholfen, dass jeweils zwei auf eine Seite sich erstreckende Stützstreben so angeordnet sind, dass sie im Wesentlichen nicht über den Durchmesser des das Drehlager bildenden Mittelteils herausragen. Diese Ausgestaltung ist aber im Hinblick auf die Standfestigkeit und den Kräfteverlauf nicht optimal.

Ein Kran mit vier sich von einem Kranunterwagen-Mittelteil erstreckenden Stützstreben und daran jeweils einzeln angebrachten Raupenträgern, wurde von der Firma TAKRAF hergestellt. Der unter der Bezeichnung TAKRAF MKZ 3000 bekannte Kran besteht aus einem Mittelstück, zwei Querträgern und vier kleinen Raupenfahrwerken. Bei diesem bekannten Kran sind das Mittelstück und die Querträger lösbar miteinander verbunden. Für den Transport werden die Querträger vom Mittelstück abgenommen. Dadurch ist der Auf- und Abbau eines solchen Kranes mit nicht unerheblichen Montierarbeiten verbunden, wodurch sich die Auf- und Abbauzeit eines solchen Kranes erhöht. Entsprechend sind die Betriebs- und Einsatzkosten eines solchen Kranes relativ hoch.

Aus der EP 1 466 856 A2 ist ein fahrbarer Kran mit einem Unterwagen dem Oberbegriff des Ansprunchs und mit Abstüitzvorrichtung bekannt. Ein derartiger Kran weist Raupenträger und zusätzliche schwenkbare Stützstreben auf, über die der Kran mittels Bodenabstützträgern auf einer Unterlage abgestützt werden kann. Aufgrund der Demontierbarkeit der Raupenträger ist der Transport des Krans mit einem entsprechenden Transportfahrzeug aufwändig und somit kostenintensiv.

### DARSTELLUNG DER ERFINDUNG

Es ist die Aufgabe der Erfindung, die Nachteile ds Stands der Technik zu verneinden. Diese Aufgabe wird erfindungsgemäss durch einen kranunterwagen nach Ansprusch 1 gelöst.

Gemäß der vorliegenden Erfindung ist ein Kranunterwagen geschaffen, der ein Mittelteil aufweist, dass zum lösbaren Montieren eines drehbaren Kranoberwagens ausgebildet ist. An dem Mittelteil des Kranunterwagens sind mehrere Stützstreben schwenkbar gelagert angebracht. Dadurch können die Stützstreben eine Transport- und mindestens eine Betriebsstellung einnehmen, ohne dass aufwendige Montagearbeiten anfallen. Außerdem sind die Stützstreben dieses Kranunterwagens gemäß der Erfindung so ausgebildet, dass daran die für den Kranbetrieb notwendigen Auf lagerelemente anbringbar sind. Bei den Auflagerelementen kann es sich um Raupenträger oder für die Variante als PC-Kran um Bodenabstützträger handeln. Beispielsweise erfolgt das Schwenken der Stützträger jeweils um eine im Wesentlichen vertikale Achse. Der Kranunterwagen sieht vor, dass das Mittelteil einen Außenumfang hat, an dem vier Schwenkgelenke ausgebildet sind, an denen jeweils eine Stützstrebe schwenkbar gelagert ist. Diese Ausgestaltung ermöglicht eine optimale Vergrößerung der Abstützfläche bei in Betriebsstellung befindlichen Stützstreben. Außerdem ist es dabei aber auch ohne weiteres möglich, die Stützstreben so zu verschwenken, dass eine optimale Transportstellung eingenommen werden kann, wie sie bereits zuvor erläutert wurde, insbesondere so, dass ein Transport unter Einhaltung der Straßenverkehrsvorschriften auf einem Tieflader oder dergleichen möglich ist. Ferner weist das mittelteil einen in wesentlichen topfformigen grundkörper und der Grundkörper zu den Schwenkgelenken reichende Verstrebungen.

Der Erfindung liegt der Gedanke zugrunde, erstmals einen Kranunterwagen zu schaffen, der zum einen transportoptimiert ist, zum anderen weniger Aufbauzeit benötigt. Durch die schwenkbare Lagerung der Stützstreben an dem Mittelteil des Kranunterwagens ist ein Transport auf einem üblichen Tieflader ohne weiteres möglich. Insbesondere ist ein Transport unter Einhaltung der Straßenverkehrsvorschriften durchführbar. Dadurch, dass die Verbindungen zwischen dem Mittelstück und den Stützstreben nicht lösbar, aber schwenkbar vorgesehen sind, ist das Einnehmen einer Betriebsstellung und damit das Aufstellen des Krans in kurzer Zeit möglich. Aufgrund der schwenkbaren Ausgestaltung der Stützstreben an dem Kranunterwagen-Mittelteil ist es auch beispielsweise ohne weiteres möglich, eine optimierte Betriebsstellung sowohl beim Anbringen von Raupenträgern als auch beim Anbringen von Bodenabstützträgern vorzusehen. So kann insbesondere wenn der Kranunterwagen gemäß der vorliegenden Erfindung für einen PC-Kran bestimmt ist, der Abstand der Stützstreben zueinander dahingehend optimiert werden, dass eine große Abstützfläche erzielt wird. Mit anderen Worten: Die Abstände der Enden der Stützstreben sind möglichst weit voneinander entfernt, so dass eine große "Spannweite bzw. Stützbasis" und damit eine große Abstützfläche erzielbar ist. Für den Fall, dass ein erfindungsgemäßer Kranunterwagen als Teil eines CC-Krans vorgesehen ist, ist eine im Hinblick auf die Spurbreite der Raupen optimierte Stellung der Stützstreben möglich.

Beispielsweise könnte in einer vorteilhaften Ausführungsform der vorliegenden Erfindung auch vorgesehen sein, dass die Stützstreben mehrere bzw. unterschiedliche Betriebsstellungen einnehmen können, insbesondere in Abhängigkeit von der Art der Auflagerelemente. D.h. in Abhängigkeit davon, ob der Kranunterwagen gemäß der vorliegenden Erfindung als Teil eines PC-Kranes oder eines CC-Kranes vorgesehen ist, können die Stützstreben den jeweiligen Einsatzbedingungen optimiert angepasst zueinander ausgerichtet werden, also die jeweilige optimierte Betriebsstellung einnehmen. Die Transportstellung ist dabei vorzugsweise gleich, nämlich so, dass jeweils mehrere Arme auf eine Seite des Mittelteils verschwenkt werden und die anderen Arme bzw. Stützstreben auf die andere Seite, so dass eine längliche Transporteinheit aus Mittelteil und voneinander weg gerichteten Stützstreben entsteht, die optimal auf einem Tieflader transportierbar ist.

Die erfindungsgemäße Ausgestaltung eines Kranunterwagens kann, muss aber nicht, sowohl für einen PC-Kran als auch einen CC-Kran eingesetzt werden. Eine beispielhafte Ausführungsform der Erfindung sieht vor, dass ein erfindungsgemäßer Kranunterwagen sowohl mit Raupenträgern als auch mit Bodenabstützträgern versehen werden kann, um einmal als CC-Kran und einmal als PC-Kran eingesetzt zu werden.

In einer beispielhaften Ausführungsform der Erfindung wird der erfindungsgemäße Kranunterwagen anstatt mit Bodenabstützträgern versehen zu werden in oder auf einem Sockel-Fundament befestigt, beispielsweise eingebolzt. Das Sockel-Fundament ist dann beispielsweise seinerseits wiederum in der Höhe veränderlich, wodurch der komplette Kran angehoben werden kann.

Es ist allerdings auch denkbar, dass ein erfindungsgemäßer Kranunterwagen mit den schwenkbar an dem Mittelteil gelagerten Stützstreben nur dazu ausgebildet ist, Raupenträger aufzunehmen, oder nur dazu ausgebildet ist Bodenabstützträger aufzunehmen. In dem einen Fall ist ein erfindungsgemäßer Kranunterwagen nur als Teil eines CC-Krans und im anderen Fall als Teil eines PC-Krans einzusetzen. Bevorzugt wird allerdings die Variante, in der der Kranunterwagen sowohl mit Raupenträgern bzw. Raupenfahrwerken als auch Bodenabstützträgern versehen werden kann, d.h. die jeweiligen Auflagerelemente sind lösbar an den Stützstreben angebracht und so ausgestaltet, dass deren lösbare Verbindungen an den Stützstreben des Kranunterwagens identisch sind. Dadurch ist die Einsatzbreite und die Verwendbarkeit eines erfindungsgemäßen Kranunterwagens erweitert, bei gleichzeitiger Optimierung des Transportes.

Eine weitere beispielhafte Ausführungsform eines erfindungsgemäßen Kranunterwagens sieht vor, dass auf dem Grundkörper konzentrisch zur Mittelachse des Grundkörpers eine Drehlagereinheit vorhanden ist. Auf dieser Drehlagereinheit ist der Kranoberwagen drehbar montierbar. Die Ausgestaltung der Drehlagereinheit ist im Stand der Technik hinlänglich bekannt und braucht daher hier nicht weiter im Detail erörtert werden.

Zur Erzielung einer noch größeren Abstützfläche bzw. Abstützbasis, insbesondere wenn ein erfindungsgemäßer Kranunterwagen in der Variante als PC-Kran eingesetzt wird, ist es beispielsweise möglich, an den Enden der Stützstreben Außenträger lösbar zu befestigen und an den Außenträgern die Auflageelemente wie beispielsweise Raupenträger oder Bodenabstützträger lösbar anzubringen. Diese erfindungsgemäße Ausgestaltung ermöglicht eine Vergrößerung der "Spannweite bzw. Stützbasis", der sich in der Betriebsstellung befindlichen Stützstreben. Gleichzeitig ist aber durch die Abnehmbarkeit weiterhin eine optimierte Transportierbarkeit gegeben. Gegenüber dem Stand der Technik muss hier nur eine Verbolzung oder dergleichen, also allgemein die irgendwie geartete Verbindung zwischen Außenträger und Stützstrebe gelöst werden. Sobald die Außenträger abgenommen sind, können die Stützstreben in der zuvor beschriebenen Weise erfindungsgemäß verschwenkt werden, um eine optimierte Transportstellung einzunehmen.

Wie bereits zuvor erläutert, kann die Art der Verbindung zwischen Außenträger und Stützstrebe in einer im Kranbau üblichen Weise erfolgen, insbesondere durch Verbolzen. Es ist allerdings auch möglich, derartige Außenträger an den jeweiligen Enden der Stützstreben anzuschrauben oder anderweitig zu befestigen. Es muss natürlich hierbei gewährleistet sein, dass die Verbindungsart die Übertragung der nicht unerheblichen Kräfte und Momente erlaubt.

Insbesondere betrifft die Erfindung auch einen variablen Kran, der einen erfindungsgemäßen Kranunterwagen der zuvor beschriebenen Art und einen Satz Raupen und/oder einen Satz Bodenabstützträger umfasst. Der Satz Raupen wird an die Stützstreben des Kranunterwagens abnehmbar montiert. In montiertem Zustand des Raupensatzes ist der Kran auf den Raupen verfahrbar. Wenn anstatt des Satzes Raupen Bodenabstützträger an den Stütztreben des Kranunterwagens abnehmbar montiert sind, ist der Kran ein PC-Kran und ruht auf den Bodenabstützträgern. Auf dem Kran ist dann noch ein Kranoberwagen abnehmbar montierbar; dieser ist im montierten Zustand gegenüber dem Kranwagen drehbar. Damit wird erstmals ein sowohl als PC-Kran als auch als CC-Kran einsetzbarer Kran geschaffen, der transportoptimiert und im Hinblick auf die Auf- und Abbauzeit ebenfalls optimiert ausgestaltet ist.

Das Anbringen der Raupen bzw. der Bodenabstützträger kann in hinlänglich bekannter Weise erfolgen, insbesondere durch Verbolzen etc. Bei diesem variablen Kran sind die Raupenträger und die Bodenabstützträger an den Stellen, die mit den Stützstreben des Mittelteils des Kranunterwagens lösbar verbunden werden, vorzugsweise identisch ausgebildet, damit deren Montierbarkeit an den Stützstreben gegeben ist. Vorzugsweise sind auch eventuelle Hydraulik- und/oder Pneumatikanschlüsse und/oder elektrische Anschlüsse der Raupenträger und der Bodenabstützträger gleich ausgebildet, damit diese an die jeweiligen Anschlüsse an den Stützstreben angeschlossen werden können. Damit entfallen separate Anschlüsse für die Raupenträger und die Bodenabstützträger am Mittelteil bzw. an den Stützstreben.

Die Verbindung zwischen Kranoberwagen und Kranunterwagen erfolgt in der an sich bekannten Art und Weise. Entsprechend erübrigen sich nähere Erläuterungen hierzu.

### KURZE BESCHREIBUNG DER ZEICHNUNGEN

Im Folgenden sind zur weiteren Erläuterung und zum besseren Verständnis mehrere Ausführungsbeispiele der vorliegenden Erfindung unter Bezugnahme auf die beigefügten Zeichnungen näher beschrieben. Es zeigt:
- Fig. 1: eine Draufsicht auf einen erfindungsgemäßen Kranunterwagen mit an einem Mittelteil schwenkbar gelagerten Stützstreben, die in eine Transportstellung verschwenkt sind,
- Fig. 2: eine Seitensicht des erfindungsgemäßen Kranunterwagens gemäß der Fig. 1,
- Fig. 3: eine Perspektivansicht des in den Fig. 1 und 2 dargestellten erfindungsgemäßen Kranunterwagens mit in Transportstellung verschwenkten Stützstreben auf einem Tieflader,
- Fig. 4: eine Draufsicht auf den in den Fig. 1, 2 und 3 dargestellten erfindungsgemäßen Kranunterwagen, bei dem die Stützstreben in eine Betriebsstellung verschwenkt sind,
- Fig. 5: eine Draufsicht auf den erfindungsgemäßen Kranunterwagen gemäß den Fig. 3 und 4, wobei an den Enden jeweils zweier Stützstreben ein Raupenträger montiert sind,
- Fig. 6: eine Seitenansicht auf den mit Raupenträgern versehenen Kranunterwagen gemäß der Fig. 5,
- Fig. 7: eine Perspektivansicht des in der Fig. 6 dargestellten erfindungsgemäßen Kranunterwagens,
- Fig. 8: eine Draufsicht auf eine weitere beispielhafte Ausführungsform der vorliegenden Erfindung, bei der an den einzelnen Stützstreben Außenträger zum Verlängern der Stützstreben abnehmbar oder ebenfalls verschwenkbar angebracht sind,
- Fig. 9: eine Perspektivansicht des in der Fig. 8 dargestellten erfindungsgemäßen Kranunterwagens,
- Fig. 10: eine Seitenansicht eines erfindungsgemäßen Kranunterwagens, ähnlihc dem, wie er in den Fig. 8 und 9 gezeigt ist, wobei der erfindungsgemäße Kranunterwagen hier auf Sockelfundamenten oder Bodenplatten ruht, und
- Fig. 11: eine schematisierte Seitenansicht eines erfindungsgemäßen variablen Krans, der in dieser Ausgestaltung mit Raupenträgern ausgestattet ist.

### BESCHREIBUNG VON BEISPIELHAFTEN AUSFÜHRUNGSFORMEN DER VORLIEGENDEN ERFINDUNG

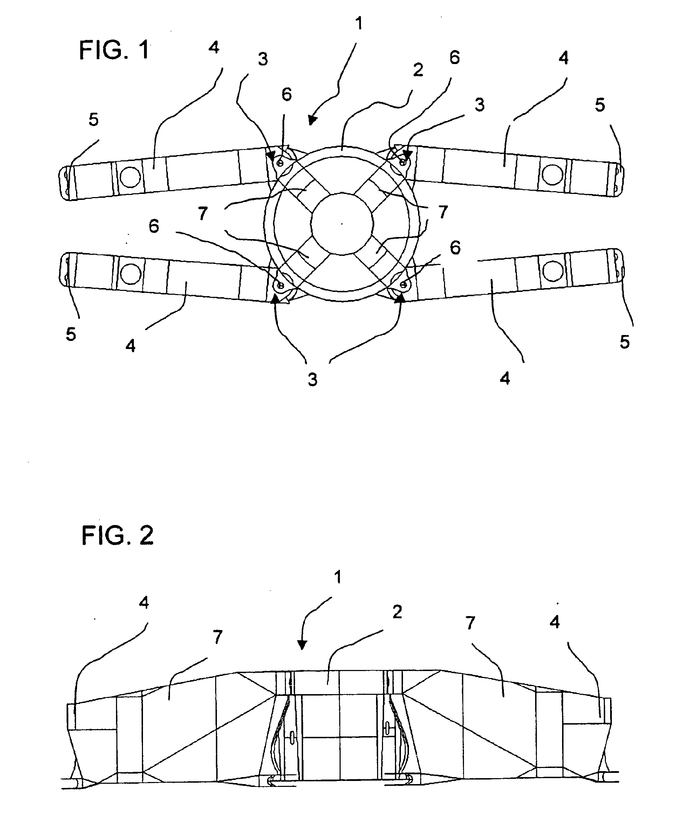

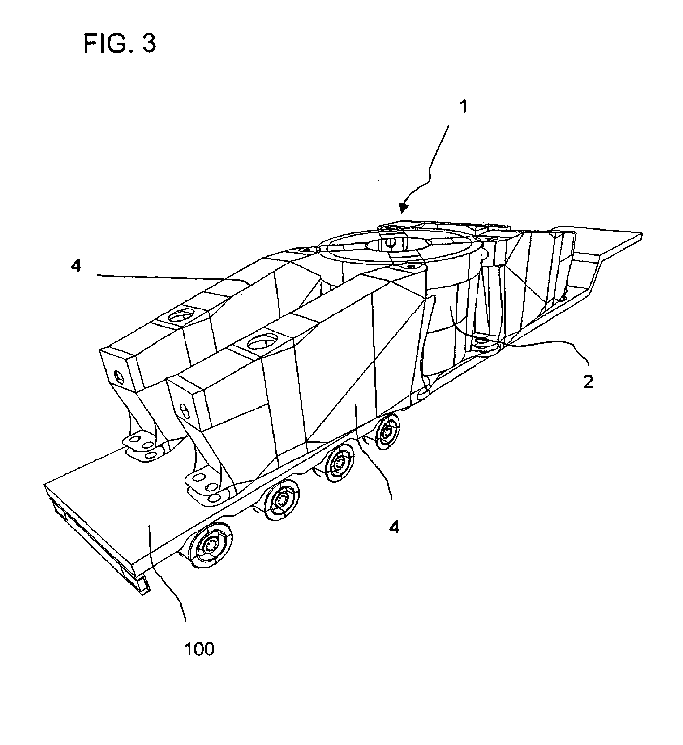

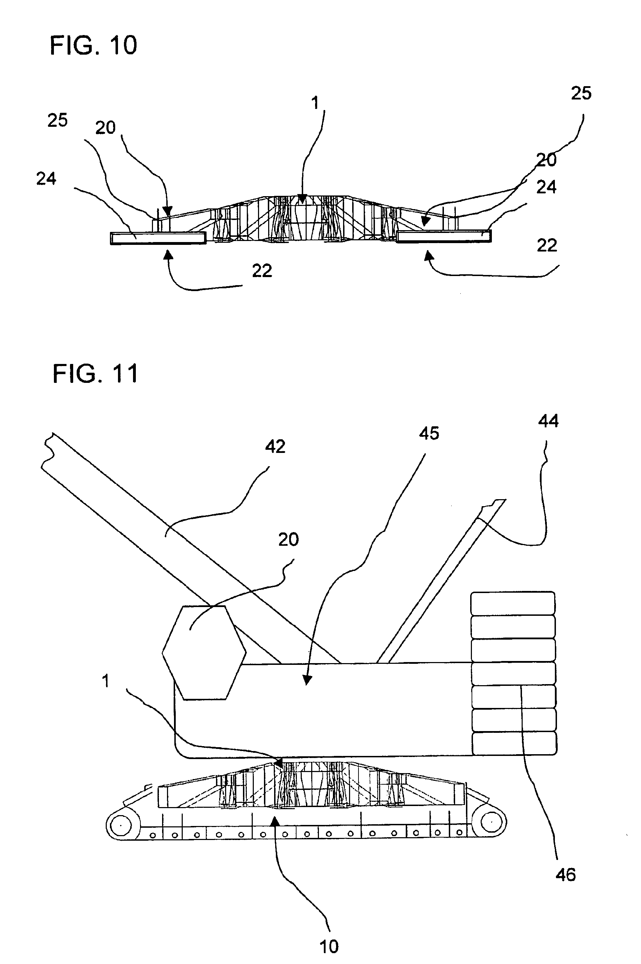

Unter Bezugnahme auf die Fig. 1 bis 6 wird eine erste beispielhafte Ausführungsform der vorliegenden Erfindung beschrieben. Wie insbesondere aus der in der Fig. 1 gezeigten Draufsicht eines erfindungsgemäßen Kranunterwagens 1 ersichtlich ist, umfasst der erfindungsgemäße Kranunterwagen 1 ein Mittelteil, dass einen im Wesentlichen topfförmigen Grundkörper 2 bildet. Dieser topfförmige Grundkörper 2 ist mit einer hier nur schematisch dargestellten Drehlagereinheit versehen, die ein lösbares Anbringen eines nur in der Fig. 11 dargestellten Kranoberwagens 40 drehbar auf dem topfförmigen Grundkörper 2 erlaubt.

Am Außenumfang des topfförmigen Grundkörpers 2 des erfindungsgemäßen Kranunterwagens 1 sind hier insgesamt vier Schwenkgelenke 3 ausgebildet, an denen jeweils eine sich im Wesentlichen horizontal bzw. waagrecht erstreckende Stützstrebe 4 gegenüber dem topfförmigen Grundkörper 2 schwenkbar angebracht sind. In dem hier gezeigten Ausführungsbeispiel eines erfindungsgemäßen Kranunterwagens 1 sind die Schwenkgelenke 3 in 90° Abständen in Bezug auf die Mittelachse des Grundkörpers 2 angeordnet. Es ist selbstverständlich auch möglich, zwischen den Schwenkgelenken 3 andere Winkel vorzusehen. Beispielsweise ist es auch möglich, die auf einer Seite eines Krans liegenden Schwenkgelenke 3 so anzuordnen, dass der zwischen den beiden Schwenkgelenken 3 eingeschlossene Winkel größer als 90°, beispielsweise 120° ist. Dadurch ist unter Umständen eine optimiertere Transportstellung erzielbar.

Die Schwenkgelenke 3 umfassen beispielsweise jeweils einen oberen und einen unteren Flansch, die vom Grundkörper 2 nach außen vorstehen. Zwischen den übereinander liegenden Flanschen ragt ein Ende eines Stützträgers 4. Durch das Ende dieses Stützträgers 4 und die zwei Flanschstücke verläuft ein Bolzen 6, der das Schwenkgelenk 3 bildet.

An dem Außenende jeder Stützstrebe 4 ist eine Aufnahmeeinrichtung 5 vorhanden, die ein abnehmbares Anbringen von Auflagerelementen erlaubt. Die Aufnahmeeinrichtung 5 kann beispielsweise durch eine Verbolzung gebildet sein, wie sie im Stand der Technik hinlänglich bekannt ist.

Die Seitenansicht der Fig. 2 zeigt einen Teil des erfindungsgemäßen Kranunterwagens 1, hier insbesondere den topfförmigen Grundkörper 2. Wie hieraus ersichtlich ist, besitzt der Grundkörper 2 zu den Schwenkgelenken 3 reichende Verstrebungen 7, die die Steifigkeit des Kranunterwagens 1 erhöhen und das Weiterleiten von Kräften über die Stützstreben 4 und die Auflageelemente 10 bzw. 20, die später noch beschrieben werden, in den Boden erlaubt. Ergänzend wird zudem auf die perspektivische Ansicht des in den Fig. 1 und 2 gezeigten Kranunterwagens 1 verwiesen, der hier zum Transport auf einem Tieflader 100 abgelegt ist. Aus dieser Darstellung werden insbesondere auch die Abmessungen eines solchen Kranunterwagens deutlich. So kann der topfförmigen Grundkörper 2 einen Durchmesser von ungefähr 2 m, u.U. auch 2,5-4 m haben und die Stützstreben können beispielsweise eine Länge von ungefähr 2 m, oder sogar 3-4 m haben. Selbstverständlich sind auch Abweichungen der genannten Abmessungen nach oben oder unten möglich. Insbesondere sind auch alle Zwischenwerte möglich.

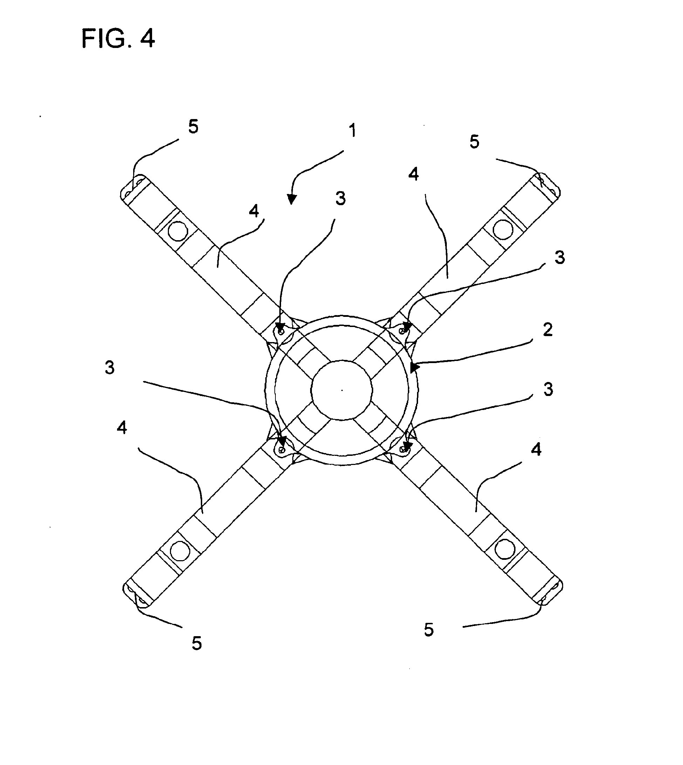

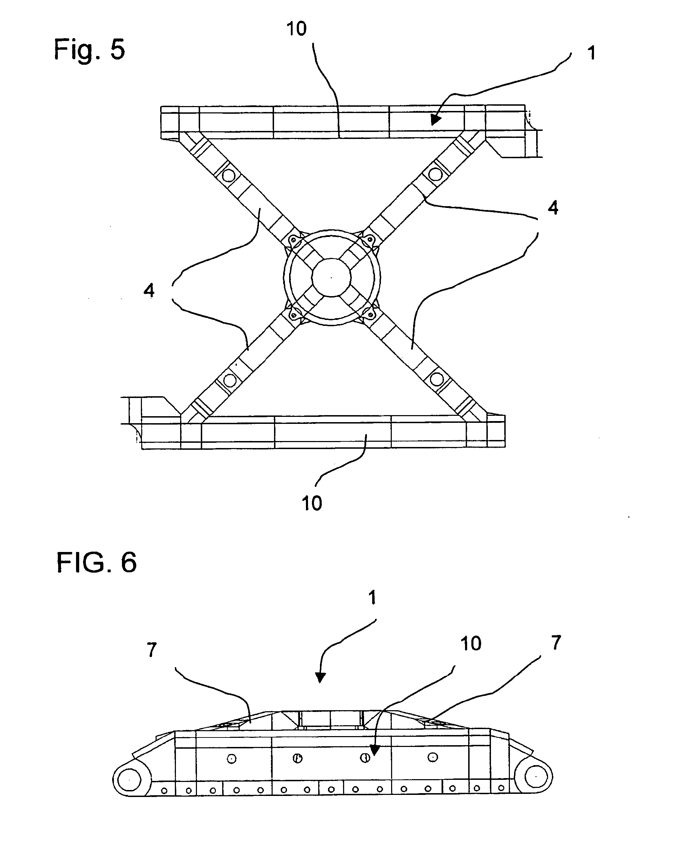

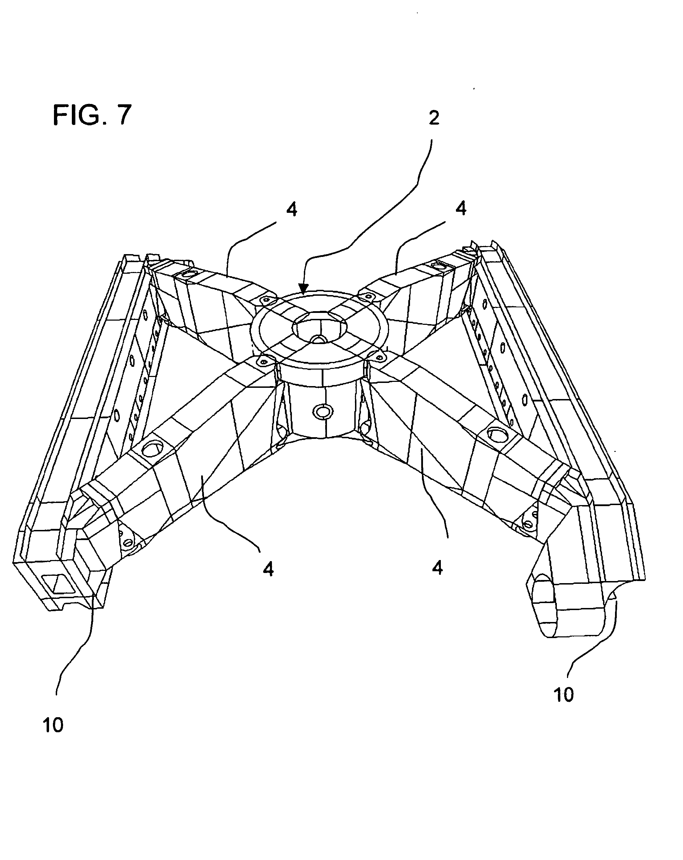

In der Fig. 1 nehmen die Stützstreben 4 eine optimierte Transportstellung ein. Der Kranunterwagen 1 mit der in der Fig. 1 gezeigten Schwenkstellung der Stützstreben 4 wird somit längs auf einen Tieflader gelegt und zum nächsten Einsatzort transportiert. Am Einsatzort werden dann die Stützstreben 4 in die in der Fig. 4 gezeigte Betriebsstellung verschwenkt und optional in dieser Betriebsstellung verriegelt. Im Falle des Einsatzes des Kranunterwagens als CC-Kran werden dann, wie in der Fig. 5 bzw. 6 und der Perspektivansicht der Fig. 7 gezeigt, an jeweils zwei Stützstreben 4 ein Raupenträger 10 montiert. Es ist selbstverständlich auch möglich, dass an jeder Stützstrebe 4 ein separater Raupenträger 10 angebracht wird, wie es beispielsweise auch von dem eingangs genannten TAKRAF MKZ 3000 bekannt ist. Die Verbindung der Außenträger 4 und des jeweiligen Raupenträgers 10 erfolgt wiederum durch die bekannte Verbolzung. Beispielsweise kann die aus der EP 0 736 480 B1 bekannte Verbolzung benutzt werden.

Die perspektivische Ansicht des Kranunterwagens gemäß der Fig. 7 zeigt insbesondere auch die Verbindungsstellen zwischen den Raupenträgern 10 und den Stützstreben 4.

Alternativ zu der in der Fig. 5 gezeigten Ausführungsform können anstatt der Raupenträger 10 an jeder Stützstrebe 4 auch Bodenabstützträger 22 abnehmbar angebracht werden, wie sie in der Fig. 10 schematisch dargestellt sind. Dabei sind Bodenplatten 24 über Stützen 25 an den Enden der Stützträger 4 lösbar bzw. abnehmbar befestigt.

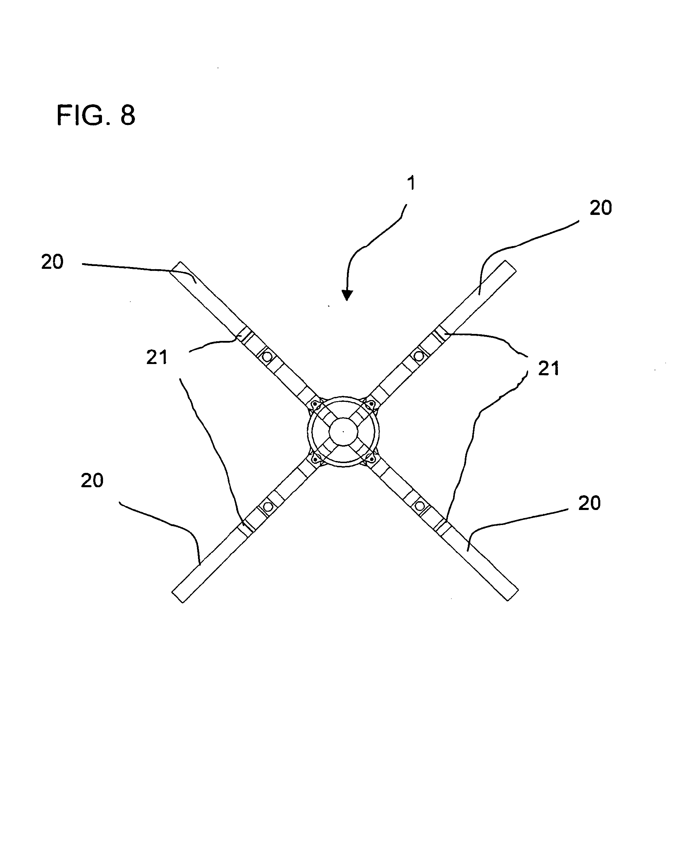

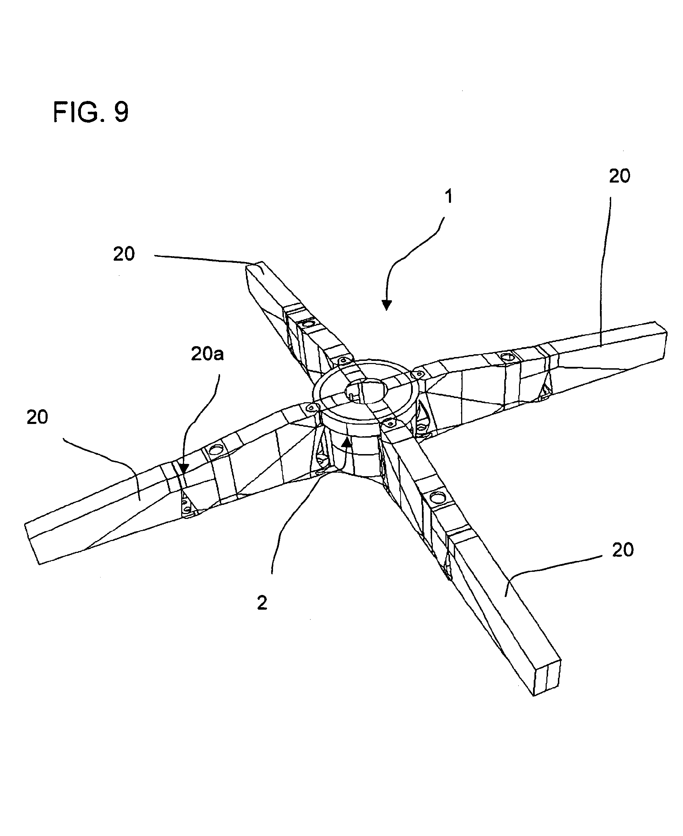

In den Fig. 8 und 9 ist eine weitere beispielhafte Ausführungsform der vorliegenden Erfindung gezeigt. Hier sind zur Vergrößerung der Abstützfläche an den Außenenden der Stützträger 4 Außenträger 20 lösbar montiert, an deren Außenenden dann wiederum Raupenträger 10 oder Bodenabstützträger 22 montierbar sind.

In der Fig. 8 ist der um die Außenträger 20 ergänzte Kranunterwagen 1 gemäß der vorliegenden Erfindung, wie er in der Fig. 8 gezeigt ist, in der Seitenansicht dargestellt und insbesondere sind hier die Bodenabstützträger 22 ersichtlich, die an den Außenenden der Außenträger 20 lösbar angebracht sind. Die perspektivische Ansicht des Kranunterwagens gemäß der Fig. 9 zeigt insbesondere auch die Verbindungsstellen zwischen den Stützstreben 4 und den Außenträgern oder Strebenverlängerungen 25.

Schließlich zeigt die schematische Seitenansicht gemäß der Fig. 11 einen erfindungsgemäßen variablen Kran mit Kranunterwagen 1, an dem schwenkbar gelagert mehrere Stützstreben 4 angebracht sind. An dem Kranunterwagen 1 gemäß der vorliegenden Erfindung ist ein Kranoberwagen 40 mit Fahrerkabine 45 angebracht, der im Betrieb gegenüber dem Kranunterwagen 1 drehbar ist. In dem in der Fig. 11 gezeigten Ausführungsbeispiel der vorliegenden Erfindung ist der Kran als CC-Kran ausgebildet und entsprechend sind an dem erfindungsgemäßen Kranunterwagen 1 Raupenträger 10 lösbar montiert. Ergänzend ist anzumerken, dass der erfindungsgemäße Kranoberwagen 40 Gegengewichte 46 sowie einen Gittermast 42 aufweist, der über einen Derrickmast 44 abgespannt wird. Diese Elemente sind in der Fig. 11 nur schematisch dargestellt und entsprechen dem Stand der Technik, so dass weitere Erläuterungen hierzu nicht notwendig sind.

## Patentansprüche

1. Kranunterwagen (1), umfassend:
- ein Mittelteil (2), das zum lösbaren Montieren eines drehbaren Kranoberwagens (40) ausgebildet ist, und
- mehrere Stützstreben (4), die zum Einnehmen einer Transport- und wenigstens einer Betriebsstellung an dem Mittelteil (2) schwenkbar gelagert sind und an denen für den Kranbetrieb notwendige Auflagerelemente (10; 22) anbringbar sind,
wobei das Mittelteil (2) einen Außenumfang hat, an dem vier Schwenkgelenke (3) ausgebildet sind, an denen jeweils eine Stützstrebe (4) drehbar gelagert ist, **dadurch gekennzeichnet, dass**
das Mittelteil einen im wesentlichen topfförmigen Grundkörper (2) umfasst und der Grundkörper (2) zu den Schwenkgelenke (3) reichende Verstrebungen (7) zur Erhöhung der Steifigkeit des Kranunterwagens (1) und zur Weiterleitung von Kräften über die Stützstreben (4) und die Auflagerelemente (10; 22) in den Boden aufweist.

2. Kranwagen nach Anspruch 1, **dadurch gekennzeichnet, dass** die Stützstreben (4) in der zumindest einen Betriebsstellung arretierbar sind.

3. Kranwagen nach einem der voranstehenden Ansprüche, **dadurch gekennzeichnet, dass** eine erste Gruppe von Stützstreben (4) in der Transportstellung in eine erste Richtung verschwenkt sind und eine zweite Gruppe von Stützstreben (4) in der Transportstellung in eine zweite Richtung verschwenkt sind, die der ersten Richtung entgegengesetzt ist.

4. Kranwagen nach einem der voranstehenden Ansprüche, **dadurch gekennzeichnet, dass** auf dem grundkörper konzentrisch zu der Mittelachse des Grundkörpers (2) eine Drehlagereinheit vorhanden ist, auf der der Kranoberwagen (40) drehbar montierbar ist.

5. Kranwagen nach einem der Ansprüche 1-4, **dadurch gekennzeichnet, dass** die an den Stützstreben (4) montierbaren Auflagerelemente Raupenträger (10) sind.

6. Kranwagen nach einem der Ansprüche 1-4, **dadurch gekennzeichnet, dass** die an den Stützstreben (4) montierbaren Auflagerelemente Bodenabstützträger (22) sind.

7. Kranwagen nach einem der voranstehenden Ansprüche, **dadurch gekennzeichnet, dass** jede Stützstrebe (4) aus mehreren Segmenten besteht, die zum Transport über Schwenkgelenke gegeneinander schwenkbar sind.

8. Kranwagen nach Anspruch 7, **dadurch gekennzeichnet, dass** die Segmente einer Stützstrebe (4) zumindest in ihrer Betriebsstellung gegeneinander arretierbar sind.

9. Kranwagen nach einem der voranstehenden Ansprüche, **dadurch gekennzeichnet, dass** an den Enden der Stützstreben (4) Außenträger (20) lösbar befestigbar sind und an den Außenträgem (20) die Auflagerelemente (10; 22) lösbar anzubringen sind.

10. Kranwagen nach einem der Ansprüche 1-6, **dadurch gekennzeichnet, dass** an den Enden der Stützstreben (4) Außenträger (20) schwenkbar befestigt sind und an den Außenträgern (20) die Auflagerelemente (10; 22) lösbar anzubringen sind.

11. Kranwagen nach einem der Ansprüche 1 bis 4 und 7 bis 10, **dadurch gekennzeichnet, dass** der Kranunterwagen (1) in oder auf einem Sockel-Fundament befestigt ist.

12. Variabler Kran, umfassend:
- einen Kranunterwagen (1) nach einem der voranstehenden Ansprüche,
- einen Satz Raupen (10), die an den Stützstreben (4) des Kranunterwagens (1) abnehmbar montierbar sind, wobei in montiertem Zustand des Raupensatzes der Kran auf den Raupen (10) verfahrbar ist,
- und/oder einen Satz Bodenabstützträger (22), die an den Stützstreben (4) des Kranunterwagens (1) abnehmbar montierbar sind, wobei bei montierten Bodenabstützträgern (22) der Kran auf den Bodenabstützträgern (22) ruht,
- einen Kranoberwagen (40), der auf dem Kranunterwagen (1) abnehmbar montierbar ist und in montiertem Zustand gegenüber dem Kranunterwagen (1) drehbar ist.

## Claims

1. A crane undercarriage (1) comprising:
- a centre section (2) constructed for detachable mounting of a rotatable crane superstructure (40), and
- a plurality of outriggers (4) pivotably supported on the centre section (2) for assuming a transport configuration and at least one operational configuration and adapted to attach support elements (10; 22) necessary for operation of the crane, wherein the centre section (2) has an outer circumference on which at least four pivot hinges (3) are formed, one outrigger (4) being rotatably supported on each of the pivot hinges, **characterized in that** the centre section comprises an essentially pot-shaped base body (2) and the base body (2) and the base body (2) comprises struts (7) extending to the pivot hinges (3), increasing the stiffness of the crane undercarriage (1) and transferring forces via the outriggers (4) and the support elements (10; 22) to the ground.

2. The crane undercarriage according to claim 1, **characterized in that** the outriggers (4) are lockable in the at least one operational configuration.

3. The crane undercarriage according to one of the preceding claims, **characterized in that** a first group of outriggers (4) are pivoted in a first direction in the transport configuration and a second group of outriggers (4) are pivoted in a second direction in the transport configuration, the second direction being opposed to the first direction.

4. The crane undercarriage according to one of the preceding claims, **characterized in that** a rotary support unit is provided on the base body (2) coaxial to the central axis of the base body, the crane superstructure (40) being rotatably mountable on the rotary support unit.

5. The crane undercarriage according to one of claims 1 to 4, **characterized in that** the support elements mountable on the outriggers (4) are crawler side frames (10).

6. The crane undercarriage according to one of claims 1 to 4, **characterized in that** the support elements mountable on the outriggers (4) are floor support plates (22).

7. The crane undercarriage according to one of the preceding claims, **characterized in that** each outrigger (4) is composed of a plurality of segments that are pivotable against each other by pivot hinges for transport.

8. The crane undercarriage according to claim 7, **characterized in that** the segments of an outrigger (4) are lockable against each other at least in their operational configuration.

9. The crane undercarriage according to one of the preceding claims, **characterized in that** outrigger extensions (20) are detachably affixable on the ends of the outriggers (4) and the support elements (10; 22) are to be detachably attached to the outrigger extensions (20).

10. The crane undercarriage according to any of claims 1 to 6, **characterized in that** outrigger extensions (20) are pivotably affixable on the ends of the outriggers (4) and the support elements (10; 22) are to be detachably attached to the outrigger extensions (20).

11. The crane undercarriage according to one of claims 1 to 4 and 7 to 10, **characterized in that** the crane undercarriage is affixed in or on a socket base.

12. A variable crane, comprising:
- a crane undercarriage (1) according to one of the preceding claims,
- a set of crawlers (10) removably mountable on the outriggers (4) of the crane undercarriage (1), wherein the crane is movable on the crawlers (10) when the crawler set is mounted,
- and/or a set of floor plates (22) removably mountable on the outriggers (4) of the crane undercarriage (1), wherein the crane rests on the floor plates (22) when the floor plates (22) are mounted,
- a crane superstructure (40) removably mountable on the crane undercarriage (1) and being rotatable with respect to the crane undercarriage (1) in the mounted state.

## Revendications

1. Châssis inférieur de grue (1) comprenant :
- une partie centrale (2) qui est conçue pour un assemblage démontable d'un châssis supérieur de grue (40), pouvant être en rotation, et
- plusieurs jambes de force (4) qui sont logées, en pouvant pivoter, sur la partie centrale (2), pour l'adoption d'une position de transport et d'au moins une position de fonctionnement, et sur lesquelles les éléments d'appui (10 ; 22) nécessaires au fonctionnement de la grue peuvent être rapportés,
la partie centrale (2) possédant un pourtour externe sur lequel sont formées quatre articulations de pivotement (3), au niveau lesquelles, chaque fois, une jambe de force (4) est logée, en pouvant tourner, **caractérisé en ce que**
la partie centrale comporte un corps de base (2), dans l'ensemble en forme de pot, et que le corps de base (2) présente des entretoises (7), allant jusqu'aux articulations de pivotement (3), pour l'augmentation de la rigidité du châssis inférieur de grue (1) et pour la transmission des forces dans le sol par l'intermédiaire des jambes de force (4) et des éléments d'appui (10 ; 22).

2. Châssis de grue selon la revendication 1 **caractérisé en ce que** les jambes de force (4) peuvent être en butée au moins dans une position de fonctionnement.

3. Châssis de grue selon l'une des revendications précédentes **caractérisé en ce qu'**un premier groupe de jambes de force (4) est pivoté dans une première direction dans la position de transport et un deuxième groupe de jambes de forces (4) est pivoté dans une deuxième direction, qui est opposée à la première direction, dans la position de transport.

4. Châssis de grue selon l'une des revendications précédentes **caractérisé en ce qu'**un ensemble de paliers de rotation, sur lequel le châssis supérieur de grue (40) peut être monté, en pouvant tourner, est présent sur le corps de base, de manière concentrique par rapport à l'axe central du corps de base (2).

5. Châssis de grue selon l'une des revendications 1-4 **caractérisé en ce que** ce sont des supports chenilles (10) qui constituent les éléments d'appui pouvant être montés sur les jambes de force (4).

6. Châssis de grue selon l'une des revendications 1-4 **caractérisé en ce que** ce sont des supports d'appui sur le sol (22) qui constituent les éléments d'appui pouvant être montés sur les jambes de force (4).

7. Châssis de grue selon l'une des revendications précédentes **caractérisé en ce que** chaque jambe de force (4) est composée de plusieurs segments, qui peuvent pivoter l'un contre l'autre par l'intermédiaire d'articulations de pivotement pour le transport.

8. Châssis de grue selon la revendication 7 **caractérisé en ce que** les segments d'une jambe de force (4) peuvent être bloqués l'un contre l'autre au moins dans leur position de fonctionnement.

9. Chassais de grue selon une des revendications précédentes **caractérisé en ce que** des supports externes (20) peuvent être fixés de manière séparable aux extrémités des jambes de force (4) et que les éléments d'appui (10 ; 22) doivent être rapportés sur les supports externes (20), pouvant en être séparés.

10. Châssis de grue selon l'une des revendications 1-6 **caractérisé en ce que** des supports externes (20) sont fixés, en pouvant pivoter, aux extrémités des jambes de force (4) et que les éléments d'appui (10 ; 22) doivent être rapportés, pouvant en être séparés, sur les supports externes (20).

11. Châssis de grue selon l'une des revendications de 1 à 4 et de 7 à 10 **caractérisé en ce que** le châssis inférieur de grue (1) est fixé dans ou sur un socle.

12. Grue modulable comprenant :
- un châssis inférieur de grue (1) selon l'une des revendications précédentes,
- un jeu de chenilles (10) qui peut être monté, pouvant en être séparé, sur les jambes de force (4) du châssis inférieur de grue (1), la grue pouvant se déplacer sur les chenilles (10) lorsque le jeu de chenilles est dans l'état monté,
- et/ou un jeu de supports d'appui sur le sol (22) qui peut être monté, pouvant en être séparé, sur les jambes de force (4) du châssis inférieur de grue (1), la grue reposant sur les supports d'appui sur le sol (22) lorsque que les supports d'appui sur le sol (22) sont dans l'état monté,
- un châssis supérieur de grue (40) qui peut être monté, en pouvant être séparé, sur le châssis inférieur de grue (1), et qui peut être en rotation par rapport au châssis de grue inférieur (1) lorsqu'il est à l'état monté.
